# EUROPEAN PATENT APPLICATION

(11) **EP 4 766 015 A1**
(43) Date of publication of application: **24.06.2026**
(21) Application number: 24221064.9
(22) Date of filing: 18.12.2024
(51) Int. Cl.: H05B 6/06, H02M 7/48

(54) **INDUCTION GENERATOR AND METHOD WITH OSCILLATION FREQUENCY CONTROL**

(71) Applicant: ELECTROLUX APPLIANCES AKTIEBOLAG, 105 45 Stockholm (SE)
(72) Inventor: VIROLI, Alex, 47122 Forli (IT); ANGELI, Fabio, 47122 Forli (IT); CHRISTIANSEN, Svend Erik, 47122 Forli (IT); ZANGOLI, Massimo, 47100 Forli (IT); ROSSI, Andrea, 47122 Forli (IT)
(74) Representative: Electrolux Group Patents

(57) **Abstract**

An induction generator (2) is configured for driving an induction circuit (4), in particular for driving an induction coil of an induction hob (30). The induction generator (2) comprises: a power supply unit (8) configured to provide an input voltage (Vi) with respect to a common voltage (Vc); a driving unit (10) configured to provide a first and a second transistor driving voltage (Vg1, Vg2); a half-bridge arrangement (12) comprising a first transistor and a second transistor (14, 16) connected in series at a middle node (22), wherein the serially connected first and second transistors (14, 16) are connected between the input voltage (Vi) and the common voltage (Vc), wherein the first transistor driving voltage (Vg1) is applied to the gate of the first transistor (14), and wherein the second transistor driving voltage (Vg2) is applied to the gate of the second transistor (16); a resonance circuit (4) comprising an induction coil element (6) being electrically connected at one end to the middle node (22) and being configured to emit an electromagnetic field when in operation; a control unit (20) having an output configured to supply a control signal to the driving unit (10) and having an input electrically connected to the middle node (22) configured for sensing the middle voltage (Vm) at the middle node. The control unit (20) is configured to apply the control signal at a setpoint frequency to the driving unit (10) such that via the first and second transistor driving voltages (Vg1, Vg2) a temporal switching sequence is implemented where the first transistor (14) is switched on and off and the second transistor (16) is switched on and off with a delay period (To) between switching off the first transistor (14) and switching on the second transistor (16). The control unit is further configured to detect the middle voltage (Vm) and/or the complimentary middle voltage (Vm*); and to evaluate the amplitude of the middle voltage (Vm) or the temporal behavior of the middle voltage (Vm) in relation to the switching off of the first transistor (14) and/or in relation to the switching on of the second transistor (16), and/or to evaluate the amplitude of the complimentary middle voltage (Vm*) or the temporal behavior of the complimentary middle voltage (Vm*) in relation to the switching off of the second transistor (16) and/or in relation to the switching on of the first transistor (14). The control unit is further configured to increase or to decrease or to maintain the setpoint frequency of the switching sequence being applied via the control signal in dependency of the evaluation. Alternatively or additionally the control unit is further configured to increase or to decrease or to maintain an on-time ratio (Ta/Tb or Tb/Ta), where within a switching sequence Ta is the duration of switching on the first transistor (14) and Tb is the duration of switching on the second transistor (16).

## Description

The invention relates to an induction generator having a control unit configured to monitor operation parameters of a resonance circuit and to change the setpoint oscillation frequency in dependency thereof.

EP 4 027 756 A1 suggests an induction heating apparatus in which the resonance circuit is driven by a half-bridge arrangement where it is known that the resonance circuit is driven in the so-called capacitive or hard-switching mode when the oscillation frequency is at or below the resonance frequency. The capacitive oscillation mode may result in overheating of the switching elements, e.g. IGBT elements. The controller monitors the current flowing through the coil, a voltage of the lower switching element and compares the temporal course of those two signals with respect to the switching sequence for the switching elements. From the relative position of the induction current and the voltage with respect to the switching state it is detected whether there is a capacitive mode. When detecting the capacitive mode the operation of the induction circuit is stopped.

It is the object of the invention to provide an induction generator and a method for operating an induction generator which provide a safe and optimized induction operation, preferably with simple monitoring of operation parameter of an induction circuit.

The invention is defined in the independent claims. Particular embodiments are set out in the dependent claims.

According to claim 1, an induction generator is provided which is configured for driving an induction circuit, in particular for driving an induction coil of an induction hob. The induction generator comprises: a power supply unit configured to provide an input voltage Vi with respect to a common voltage Vc; a driving unit configured to provide a first and a second transistor driving voltage Vg1, Vg2; a half-bridge arrangement comprising a first transistor and a second transistor connected in series at a middle node, wherein the serially connected first and second transistors are connected between the input voltage Vi and the common voltage Vc, wherein the first transistor driving voltage Vg1 is applied to the gate of the first transistor, and wherein the second transistor driving voltage Vg2 is applied to the gate of the second transistor; a resonance circuit comprising an induction coil element being electrically connected at one end to the middle node and being configured to emit an electromagnetic field when in operation; a control unit having an output configured to supply a control signal to the driving unit and having an input electrically connected to the middle node configured for sensing the middle voltage Vm at the middle node. The control unit is configured: to apply the control signal at a setpoint frequency to the driving unit such that via the first and second transistor driving voltages Vg1, Vg2 a temporal switching sequence is implemented where the first transistor is switched on and off and the second transistor is switched on and off with a first delay period To1 between switching off the first transistor and switching on the second transistor and a second delay period To2 between switching off the second transistor and switching on the first transistor. The control unit is further configured to detect the middle voltage Vm and/or the complimentary middle voltage Vm*; to evaluate the amplitude of the middle voltage Vm or the temporal behavior of the middle voltage Vm in relation to the switching off of the first transistor and/or in relation to the switching on of the second transistor, and/or to evaluate the amplitude of the complimentary middle voltage Vm* or the temporal behavior of the complimentary middle voltage Vm* in relation to the switching off of the second transistor and/or in relation to the switching on of the first transistor; and - in dependency of the evaluation - to increase or to decrease or to maintain the setpoint frequency of the switching sequence being applied via the control signal. Alternatively or additionally the control unit is further configured to increase or to decrease or to maintain an on-time ratio Ta/Tb or Tb/Ta, where within a switching sequence Ta is the duration of switching on the first transistor (14) and Tb is the duration of switching on the second transistor (16).

When operating a half-bridge for driving an induction coil the maximum power can be transferred to a wave-absorbing object (e.g. a cooking vessel) when the resonance circuit is driven at the resonance frequency. The power transfer to the object decreases the more the farther the setpoint frequency is away from the resonance frequency. At the resonance frequency the operation mode of the half-bridge changes from an induction mode for frequencies above the resonance frequency to a capacitive mode for frequencies below the resonance frequency.

In the capacitive mode the middle voltage has not reached zero-voltage after the switching-off of the first transistor at the timepoint when the second transistor is switched on. This results in a discharge current due to the non-zero middle voltage across the second transistor whereby the second transistor heats up and may be damaged (e.g. by repeated heating up when switching on the second transistor). Thus a tradeoff between maximum power, i.e. operation at the resonance frequency, and avoidance of the capacitive mode at a frequency higher than the resonance frequency has to be made.

The resonance frequency itself is not a fixed frequency specific for the induction generator, but the resonance frequency also depends on the wave-absorbing object, specifically the wave coupling between the induction coil and the wave-absorbing object. For example the resonance condition and thus resonance frequency may change with the the temperature of the wave-absorbing object (e.g. the temperature of the cooking vessel and/or the food to be processed in the vessel), the temperature of the coil, the position of the wave-absorbing object relative to the induction coil, the amount of e.g. food in the wave-absorbing object. Thus by induction heating the resonance frequency may change. Thus it is needed to permanently or repeatedly verify that the induction generator (half-bridge) is not operated in the capacitive mode.

The power supply unit can also be denoted as a rectifying and optionally smoothening unit which receives for example a conventional AC voltage from the grid and transforms it into a preferably smoothened DC intermediate voltage.

Preferably the evaluation by the control unit is applied when the control unit is controlled to supply a maximum power to the resonance circuit. When the control unit is in a phase where maximum power is to be applied to the resonance circuit (e.g. when there is need to apply maximum induction heating to a cooking vessel) the setpoint frequency is close to the resonance frequency and there is the risk that the operation mode of the half-bridge arrangement changes from the resonance mode to the capacitive mode.

The evaluation by the control unit may additionally or alternatively be applied when the induction generator is operated in a sort of pulse width modulation mode where the induction generator is repeatedly operated for a first period while it is deactivated for a second period such that in average the average power results from the power dissipated during the first period times the ratio of the first period to the second period (the ratio being the so called duty cycle). Preferably the evaluation and adjustment is made during the first period and more preferably the first period includes a plurality of successive temporal sequences.

One full period of the switching cycle (can also be denoted as switching sequence) is the sequence composed of switching on of the first transistor / switching off of the first transistor / (first) delay period / switching on of the second transistor / switching off of the second transistor / second delay period. The second delay period may be as long as the (first) delay period or shorter or longer. Preferably the frequency of this switching (driving) sequence is changed by extending or shortening the switch-on periods (the active phases) of the first and second transistor. Extending or shortening the switch-on periods results in a lower or higher setpoint frequency, respectively.

The "increasing or decreasing or maintaining the setpoint frequency of the switching sequence" means that the control unit is configured to do each of these (increase-, decrease- and maintain-) functions, but dependent on the evaluation implements one of these functions at a give time. For example one of these functions is made each time the switching sequence is repeated. This correspondingly applies to the control method.

By the control unit increasing or decreasing the setpoint frequency the operation region of hard switching (in the capacitive operation regime) can be avoided thereby avoiding excessive heating of the transistors such that transistors can be used which are more cost-effective.

The middle node can also be denoted as middle point and is the common point of the transistors where preferably the collector of the lower side transistor and the emitter of the upper side transistor are electrically connected.

Preferably the information about the switching off of the first transistor and/or the information about the switching on of the second transistor is retrieved from the control signal applied from the control unit to the driving unit, and/or is retrieved from the internal control functions implemented in the control unit, and/or is retrieved from a timer, preferably a timer integrated in the control unit, wherein the timer provides the control signal to the driving unit which triggers the switching of the first transistor and/or which triggers the switching of the second transistor.

The information about the switching off and/or switching on preferably is not taken from measurement at the first and/or second transistor, but is taken at the control unit which is the 'source' of the switching of the transistors.

Preferably the control unit is configured to evaluate the amplitude of the middle voltage Vm or the temporal behavior of the middle voltage, and to evaluate the amplitude of the complimentary middle voltage Vm* = Vi - Vm or the temporal behavior of the complimentary middle voltage. Herein the temporal behavior of the middle voltage may be the gradient of the middle voltage dVm/dt and/or the temporal behavior of the complimentary middle voltage may be the gradient of the middle voltage dVm*/dt.

Preferably the control unit is configured to evaluate the amplitude of the middle voltage Vm or the temporal behavior of the middle voltage exclusively in the time interval of the first deadtime To1 which is from the switching off of the first transistor to the switching on of the second transistor, and/or to evaluate the amplitude of the complimentary middle voltage Vm* = Vi - Vm or the temporal behavior of the complimentary middle voltage exclusively in the time interval of the second deadtime To2 which is from the switching off of the second transistor to the switching on of the first transistor.

Herein preferably the middle voltage and/or the temporal behavior of the middle voltage is exclusively evaluated in the time interval of the first deadtime To1 and/or the complimentary middle voltage. I.e. the middle voltage or its associated value is only evaluated during To1 and at no other time. Alternatively or additionally herein the complimentary middle voltage Vm* and/or the temporal behavior of the complimentary middle voltage is exclusively evaluated in the time interval of the second deadtime To1. I.e. the middle voltage or its associated value is only evaluated during To1 and at no other time.

Further herein preferably the only parameter of the resonance circuit that is considered for determining whether the oscillation/setpoint frequency has to be increased, maintained or decreased is the middle voltage and/or the complimentary middle voltage and/or the temporal behavior of the middle voltage and/or the temporal behavior of the complimentary middle voltage.

Preferably the control unit is configured to monitor the middle voltage Vm in the period To1 from switching off the first transistor and switching on the second transistor, during the monitoring period, to compare the middle voltage with a first voltage threshold Vn and if the middle voltage Vm does not fall below or down to the first voltage threshold to determine that there is a hard switching event. Alternatively or additionally the control unit is configured to monitor the complimentary middle voltage Vm* in the period To2 from switching off the second transistor and switching on the first transistor, during the monitoring period, to compare the middle voltage with a second voltage threshold Vn* and if the complimentary middle voltage Vm* does not fall below or down to the second voltage threshold to determine that there is a hard switching event.

Preferably the control unit is configured, after the monitoring of the middle voltage and/or complimentary middle voltage in the monitored period, to increase the setpoint frequency if there was an event, otherwise to decrease the setpoint frequency; or to count the number of events in a preceding predetermined time period and to increase the setpoint frequency, if the counted number of events is above a first event limit La, to maintain the setpoint frequency, if the counted number of events is the same or less than the first event limit La and above a second event limit Lb, and to decrease the setpoint frequency, if the counted number of events is the same or less than the second event limit Lb.

Preferably at each detection of a hard switching event the setpoint frequency is increased and in case of non-occurrence of a hard-switching event the setpoint frequency is decreased. More preferably there is a counter and the number of events that occurred during a preceding predetermined time period is counted. This avoids a permanent change of the setpoint frequency and a more steady control behavior is achieved. Preferably the predetermined time period includes a plurality of switching cycles, for example 10 to 30, 25 to 75 or 50 to 100 switching cycles.

The counted numbers of events over the predetermined time period can be used after each switching cycle for adapting the setpoint frequency or it can be used for adaptation only after every n-th switching cycle, with n for example 3, 5 or 10.

Preferably the control unit is configured, after the monitoring of the middle voltage and/or complimentary middle voltage in the monitored period, to increase the on-time ratio Ta/Tb or Tb/Ta, if there was an event, otherwise to decrease the on-time ratio. In the alternative the control unit is configured to count the number of events in a preceding predetermined time period and to increase the on-time ratio, if the counted number of events is above a third event limit Lm, to maintain the on-time ratio, if the counted number of events is the same or less than the third event limit Lm and above a fourth event limit Ln, and to decrease the on-time ratio, if the counted number of events is the same or less than the fourth event limit Ln. The fourth event limit is less than the third event limit Lm > Ln.

Preferably the control unit is configured to provide an initial set-value for the on-time ratio and to decrease the on-time ratio not below the initial set-value, wherein preferably the initial set-value for the on-time ratio is depending on a target power level at which the resonance circuit is to be operated. Alternatively or additionally the control unit is configured to provide an initial set-value for the setpoint frequency and to increase the setpoint frequency not above the initial set-value, wherein preferably the initial set-value for the setpoint frequency is depending on a target power level at which the resonance circuit is to be operated.

Preferably the control unit is configured to evaluate the amplitude of the middle voltage Vm or the temporal behavior of the middle voltage, a) by detecting the timepoint when the middle voltage Vm reaches a predetermined voltage value Vn, in particular the timepoint when the middle voltage Vm reaches zero-voltage, in relation to the timepoint of switching off of the first transistor and/or to the timepoint of switching on of the second transistor, and/or b) by detecting the gradient of the middle voltage Vm after switching off the first transistor, and/or c) by detecting the decrease of the middle voltage Vm after switching off of the first transistor with respect to the timepoint of switching off of the first transistor and/or to the timepoint of switching on of the second transistor.

Alternatively or additionally the control unit is configured to evaluate the amplitude of the complimentary middle voltage Vm* or the temporal behavior of the complimentary middle voltage, a') by detecting the timepoint when the complimentary middle voltage Vm* reaches a predetermined voltage value Vn*, in particular the timepoint when the complimentary middle voltage Vm reaches zero-voltage, in relation to the timepoint of switching off of the second transistor and/or to the timepoint of switching on of the first transistor, and/or b') by detecting the gradient of the complimentary middle voltage Vm* after switching off the second transistor, and/or c') by detecting the decrease of the complimentary middle voltage Vm* after switching off of the second transistor with respect to the timepoint of switching off of the second transistor and/or to the timepoint of switching on of the first transistor.

Preferably the control unit is configured to increase the setpoint frequency in case the timepoint at which the middle voltage Vm reaches a or the predetermined voltage value is at or close to the timepoint of switching on of the second transistor, and/or to decrease the setpoint frequency in case the timepoint at which the middle voltage Vm reaches a or the predetermined voltage value is at or close to the timepoint of switching off of the first transistor, and/or to maintain the setpoint frequency in case the timepoint at which the middle voltage Vm reaches a or the predetermined voltage value is within a predetermined time zone Tr within the delay period To, to increase the setpoint frequency when the middle voltage reaches the predetermined voltage value before the predetermined time zone Tr, and to decrease the setpoint frequency when the middle voltage Vm reaches the predetermined voltage value after the predetermined time zone Tr.

"Close to the timepoint of switching on (or off) of the second (first) transistor" means that the timepoint is within +/- 1 ms, preferably within +/- 0.5 ms or 0.2 ms from the switching on (or off) of the second (or first) transistor. As mentioned the delay period To is the time period starting when switching off the first transistor and ending when switching on the second transistor. "Maintaining" the setpoint frequency means that the frequency is not changed.

Preferably the control unit is configured to determine the voltage value of the middle voltage Vm at a predetermined time point within the delay period To and is configured to increase the setpoint frequency in case the middle voltage Vm at the predetermined time point is higher than a first voltage threshold, and/or to decrease the setpoint frequency in case the middle voltage Vm at the predetermined time point is below a second voltage threshold, and/or to maintain the setpoint frequency in case the middle voltage Vm at the predetermined time point is between a or the first and second thresholds, wherein the first voltage threshold is higher than the second voltage threshold.

Preferably the control unit is configured to increase the setpoint frequency in case the gradient of the middle voltage Vm is higher than a first predetermined gradient value in the delay period To after the switching-off of the first transistor, and/or to decrease the setpoint frequency in case the gradient of the middle voltage Vm is lower than a second predetermined gradient value in the delay period To after the switching-off of the first transistor, and/or to maintain the setpoint frequency in case the gradient of the middle voltage Vm is between the first and second predetermined gradient values in the delay period To after the switching-off of the first transistor. The first and second predetermined gradient values may be one and the same value, then the setpoint frequency is changed at each switching sequence.

Preferably the transistors are IGBT transistors, Insulated-Gate Bipolar Transistors; and/or the first transistor is the high-side transistor which is connected between the input voltage Vi and the middle node and the second transistor is the low-side transistor which is connected between the middle node and the common voltage Vc.

According to claim 12, a method of operating an induction generator is provided, in particular for operating an induction generator according to any of the preceding claims and/or for driving an induction coil of an induction hob. The induction generator comprises a resonance circuit having the induction coil and comprising a half-bridge arrangement having a first transistor and a second transistor connected in series at a middle node, wherein the serially connected first and second transistors are connected between an input voltage Vi and a common voltage Vc and the induction coil is connected to the middle node. The method comprises: applying a switching sequence, the switching sequence being repeated at a setpoint frequency for switching on and off of the first and second transistor of the half-bridge arrangement, wherein during the switching sequence the first transistor is switched on and off and the second transistor is switched on and off with a delay period To between switching off the first transistor and switching on the second transistor sensing a middle voltage Vm that is present at the middle node, a) evaluating the amplitude of the middle voltage Vm or the temporal behavior of the middle voltage Vm in relation to the switching off of the first transistor and/or in relation to the switching on of the second transistor, b) alternatively of additionally to step a), evaluating the amplitude of the complimentary middle voltage Vm* or the temporal behavior of the complimentary middle voltage Vm* in relation to the switching off of the second transistor and/or in relation to the switching on of the first transistor, and in dependency of the evaluation, increasing or decreasing or maintaining the setpoint frequency of the switching sequence.

Preferably in step a) of the method, the middle voltage Vm is monitored in the period To1 from switching off the first transistor and switching on the second transistor and compared with a first voltage threshold Vn, and if the middle voltage Vm does not fall below or down to the first voltage threshold a hard switching event is determined; and/or wherein in step b) the complimentary middle voltage Vm* in the period To2 from switching off the second transistor and switching on the first transistor is monitored and compared with a second voltage threshold Vn*, and if the complimentary middle voltage Vm* does not fall below or down to the second voltage threshold a hard switching event is determined.

Preferably the number of events that occurred in a preceding predetermined time period is counted and the setpoint frequency is increased, if the counted number of events is above a first event limit La, is maintain, if the counted number of events is the same or less than the first event limit La and above a second event limit Lb, and is decrease, if the counted number of events is the same or less than the second event limit Lb.

Alternatively in the method, the setpoint frequency is increased in case the timepoint at which the middle voltage Vm reaches a predetermined voltage value is at or close to the timepoint of switching on of the second transistor; and/or the setpoint frequency is decreased in case the timepoint at which the middle voltage Vm reaches a or the predetermined voltage value is at or close to the timepoint of switching off of the first transistor; and/or the setpoint frequency is maintained in case the timepoint at which the middle voltage Vm reaches a or the predetermined voltage value is within a predetermined time zone Tr within the delay period To, the setpoint frequency is increased when the middle voltage reaches the predetermined voltage value before the predetermined time zone Tr, and the setpoint frequency is decreased when the middle voltage Vm reaches the predetermined voltage value after the predetermined time zone Tr.

In the following, the invention is described in more detail with reference to drawings, wherein:
- Fig. 1: illustrates an induction cooking hob in a partially exploded view,
- Fig. 2: shows an induction generator for driving one of the induction circuits (may also be denoted as resonance circuits) shown in Fig. 1,
- Fig. 3: shows a time diagram illustrating the transistor drive voltages, middle voltage and coil current,
- Fig. 4a-d: show the detected middle voltage when operating the resonance circuit in different operation modes,
- Fig. 5: shows an induction generator for driving one of the induction circuits shown in Fig. 1 according to a further embodiment,
- Fig. 5a: shows an excerpt from the time diagram illustrating the transistor drive voltages and the complimentary middle voltage,
- Fig. 6: shows an exemplary routine for controlling the resonance frequency for avoiding hard switching,
- Fig. 7: shows a subroutine to be optionally implemented in the routine shown in Fig. 6,
- Fig. 8: shows an excerpt from the time diagram illustrating the transistor drive voltages operated in a 10% on-time ratio, the middle voltage and induction current, and
- Fig. 9: shows an exemplary routine for controlling the on-time ratio for minimizing hard switching.

Corresponding elements or parts are indicated in all figures with same reference signs or reference numerals. Unless otherwise mentioned elements with the same reference signs have the same function.

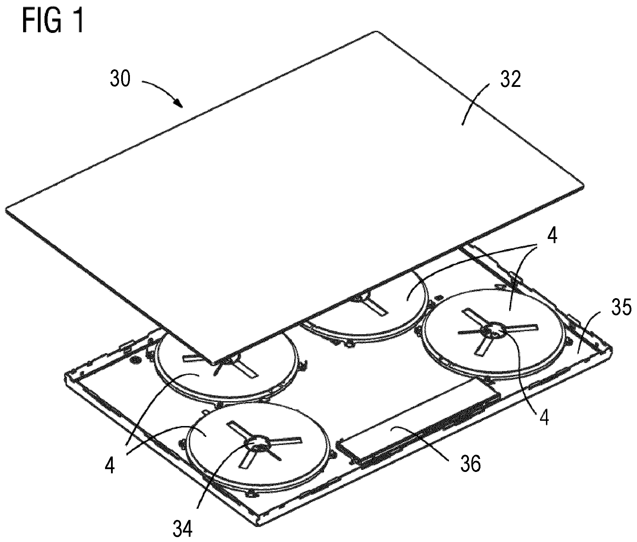

Fig. 1 shows an induction cooking hob 30 according to an embodiment in an exploded view. The induction cooking hob comprises a cover element 32 e.g. made from glass ceramic. The cover element 32 (also: cooking panel) forms the worktop of the induction cooking hob. The cover element 32 includes four different heating zones that are defined by four induction circuits 4 (also: induction coil unit) arranged below the respective areas of the cover element 32. The induction circuits 4 are mounted to a chassis 35 of the induction cooking hob 30. The chassis 5 may be made from aluminum and is capable of conducting heat. Preferably a temperature sensor 34 is arranged at each of the induction circuits 4, which is configured for detecting the temperature of the induction circuit and/or heating up by heat dissipated from a hot cooking pot positioned on the cover element 32 through the cover element. Operation of the induction cooking hob 30 is controlled by means of a user interface 36 which may be positioned at the front center area of the hob 30.

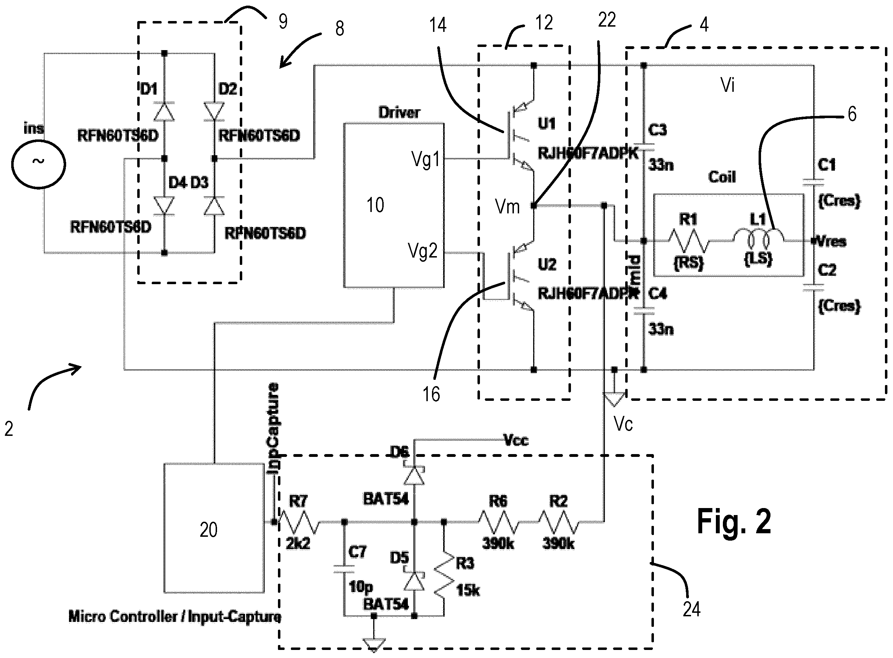

Fig. 2 shows an embodiment of an induction generator 2 for driving one of the induction circuits 4 (may also be denoted as resonance circuits) shown in Fig. 1. The induction generator 2 has a power supply unit 8 that receives the AC current from the electric home mains (e.g. at 380 V). The AC current is rectified in a rectifier unit 9 and then smoothened/filtered to provide a DC voltage herein denoted as input voltage Vi (which may also be denoted as DC link voltage), which is supplied to a half-bridge arrangement 12 of the induction generator. The half bridge arrangement is connected between the input voltage Vi and a ground or common voltage Vc.

The half-bridge arrangement 12 may have a first transistor 14 which may be denoted as upper switch or high-side transistor and a second transistor 16 which may be denoted as lower switch or low-side transistor, wherein the first and second transistors are connected in series. Preferably the first and second transistors are IGBT transistors (Insulated-Gate Bipolar Transistor). One end (collector) of the first transistor is connected to Vi and the other end (emitter) is connected to a middle node 22. One end (collector) of the second transistor is connected to the middle node 22 and the second end (emitter) is connected to the common voltage Vc. At the middle node 22 a middle voltage Vm is present, which is dependent on the switching states of the first and second transistors and the voltage generated by the resonance circuit 4 (e.g. the coil current and the charging state of capacitors C3 and C4).

The resonance circuit 4 may comprise a resonance coil 6 (L1 depicted with ohmic load R1) and resonance capacitors C1 and C2 as depicted in Fig. 2. One end of the resonance coil 6 is connected to the middle node 22 and the other end is connected between the serially connected capacitors C1, C2. The middle node 22 is further connected to the serially connected capacitors C3 and C4 which are the so-called "snubber capacitors". Capacitors C3 and C4 are configured for reducing the speed of the voltage change dV/dt across the collector-emitter when switching-off of the first and the second transistor 12, 14, respectively, thereby reducing switch-off losses. The capacity of capacitors C3, C4 may be in the range of 22 nF - 33 nF dependent on the switching transistor parameters.

The resonance circuit 4 is driven to oscillations by switching the first and second transistors 14, 16 intermittently on and off such that the middle node is either connected to the input voltage Vi or to the common voltage Vc. Switching on and off is effected by a driving unit 10 suppling intermittently a first and a second transistor drive voltages Vg1, Vg2 to the gates of the first and second transistors, respectively. The timing of the driving unit 10 is controlled by a control unit 20 by transmitting switching timing signals for switching on and off the first transistor and timing signals for switching on and off the second transistor.

The control unit 20 may either include an internal timer (not shown) or may receive a timing signal from an external timer source (not shown). The timing signal is used to generate the switching timing signal wherein a full switching cycle may comprise the following sequence at respectively determined time points: switching on the first transistor, after a given (first) on-time Ti, switching off the first transistor, after a given (first) deadtime To1, switching on the second transistor, after a given second on-time Ti (in this example both on-times are of same length), switching off the second transistor, and, after a given second deadtime To2, switching on again the first transistor. Preferably the first and second on-times have the same length and/or the first and second deadtimes have the same length. The switching cycle is repeated periodically, preferably with a repetition rate such that the oscillation of the resonance circuit 4 is in the range of e.g. 18 to 75 kHz.

A user of the cooking hob 30 may set a heating level at the selected one of the resonance circuits 4 via a respective input at the user interface 36. The heating power transmitted from the resonance circuit 4 to for example a cooking pot (not shown) can be adjusted by the hob 30 in that the duty ratio of activating the selected resonance circuit 4 is set to a specific ratio and/or the setpoint frequency of driving the resonance circuit with respect to the resonance frequency of the overall resonance circuit is adjusted. The duty ratio means that the ratio of the time that the resonance circuit is activated to the time (the resonance circuit is oscillating) that the resonance circuit is deactivated is adjusted. Each of those cycles includes a plurality of full switching cycles in the activation periods. Adjustment of the duty cycle is not further considered herein and instead power efficiency change during the times when the resonance circuit is activated is considered herein.

The power transfer from the resonance circuit 4 to for example a cooking pot depends on the oscillation frequency and is maximum when the resonance circuit oscillates at the resonance frequency of the resonance system. The resonance system is mainly formed by the resonance circuit 4 and the load to be heated and positioned on top of the cover element 32 of the cooking hob 30. The load to be heated effects the resonance condition for example by the efficiency of absorbing the emitted electromagnetic waves by the cooking pot, the size of the cooking pot, the amount of the good in the cooking pot, the temperature of the pot, the temperature of the good to be heated, and specifically the position of the pot with respect to the resonance circuit and so on. In consequence the conditions may change over time and thus the resonance frequency and power transfer efficiency.

The optimum power transfer is achieved at the resonance frequency of the resonance system. However at the resonance frequency there is a change of the operation mode of the half-bridge arrangement 12 from the so-called inductive mode which is at oscillation frequencies above resonance frequency to the so-called capacitive mode which is at oscillation frequencies below the resonance frequency. In the capacitive "hard switching mode" the switch-off is done at a moment when there was not enough (or no) energy in the resonance coil 6 to drive the middle point voltage Vm to the voltage Vi or Vc of the other rail of the DC bus (between Vi and Vc). The respective transistor 14 or 16 is switched on while there is a voltage across its collector and emitter. It will need to short circuit this voltage which is present at the snubber capacitors C3, C4 at each frequency cycle. This situation can overheat the IGBTs and is potentially destructive.

Thus in the capacitive mode the middle voltage Vm (or the complementary middle voltage Vm* - see below) does not reach zero (i.e. the common voltage Vc) in the deadtimes between switching off the one transistor and switching on the other transistor. Instead in the capacitive mode there is a non-zero (complimentary) middle voltage Vm (Vm*) when after the deadtime the other transistor is switched on. This voltage results in a discharge of the respective snubber capacitor C3 or C4 over the collector and emitter of the transistor which is just switched on when the (complimentary) middle voltage Vm (Vm*) is not already discharged. This discharge current may result in heating and in consequence damage of the transistor. On the other hand, if the resonance circuit is operated at safeguard frequencies which are higher than the resonance frequency to an unnecessary extent, then power transfer is lower than optimum power transfer.

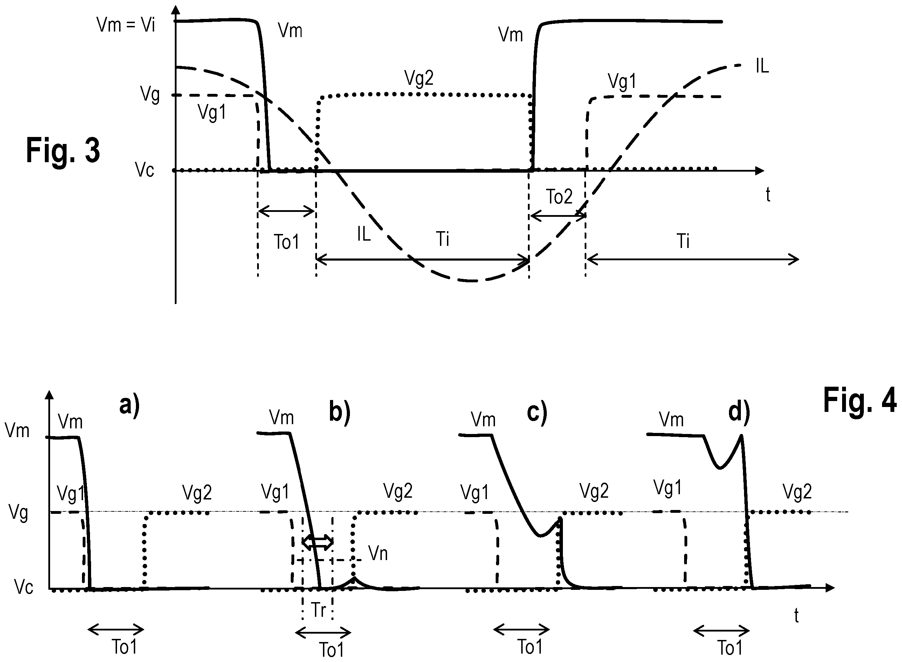

Herein an efficient and cost-effective circuitry and way of detecting the capacitive mode and optimizing the oscillation frequency is proposed. For this a voltage sensor circuit 24 is provided which is shown as an exemplary circuit in Fig. 2. A voltage sense line of the sensor circuit 24 is electrically connected to the middle node 22. As the middle voltage Vm may change between 0 and 320 V (when having 3 phases of 240 V at the mains) the sensor circuit 24 has a signal conditioning structure (also denoted as levelling circuit) such that a low voltage signal which is proportional to Vm is applied to an input of the control unit 20 which may be implemented by a microcontroller. Specifically the sensor circuit 24 is used to detect the course of the middle voltage Vm during the first deadtime To1 (which can also be denoted as first delay time) when switching off the first transistor 14 and switching on the second transistor 16 - see below in the context of Figs. 3 and 4.

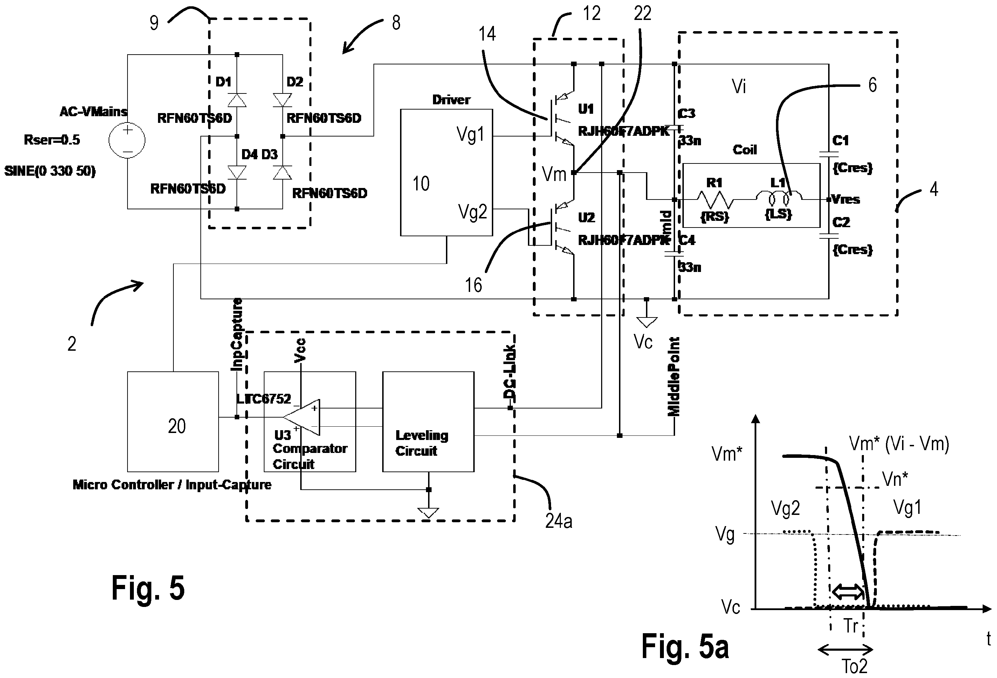

A second embodiment for a cost-efficient circuitry and way of detecting the capacitive mode is represented by the induction generator 2 shown in Fig. 5. This induction generator 2 has the same elements as the one in Fig. 2 and like elements are designated with like reference numbers and implement the same function. The only difference is a voltage sensor circuit 24a different to the sensor circuit 24 in the arrangement of Fig. 2. The sensor circuit 24a detects the voltage applied across the first transistor 14 which is the input voltage Vi minus the middle voltage Vm and is denoted herein as "complementary" voltage Vm*, i.e. Vm* = Vi - Vm. Specifically the sensor circuit 24a is used to detect the course of the complementary middle voltage Vm* during the second deadtime To2 (which also can be denoted as second delay time) when switching off the second transistor 16 and switching on the first transistor 14 - see below in the context of Fig. 5a.

The sensor circuit 24a has a signal conditioning structure ('levelling circuit') which is connected to the middle node 22 for sensing Vm and separately connected to the DC bus for sensing Vi. The signal conditioning structure down-converts both voltages to lower proportionals of Vm and Vi. By a comparator in the circuit 24a the difference of Vi - Vm = Vm* is formed and supplied to an input of the control unit 20.

Fig. 3 shows a time diagram illustrating the transistor drive voltages Vg1, Vg2, middle voltage Vm and coil current IL over a full switching cycle of switching the first transistor off (Vg1 → 0 V), first deadtime To1, switching the second transistor on (Vg2 -> Vg), switching the second transistor off (Vg2 → 0 V), second deadtime To2 and switching on the first transistor on (Vg1 → Vg). In Fig. 3 the temporal course of the middle voltage Vm is shown for the case of inductive mode oscillation of the resonance circuit 4 (compare Fig. 4a) where the middle voltage drops from Vm = Vi to Vm = 0 (zero) within the first dead time To1 where no voltage is present across the second transistor 16 when it is switched on after the first deadtime. In this inductive mode also the middle voltage rises to Vi within the second deadtime To2 such that the first transistor 14 switches on without voltage drop due to Vm = Vi and Vm* = Vi - Vm = 0 (zero) .

As also shown in Fig. 3 as an example, the (gate) on-times Ti of the first and second transistors have the same duration and/or the deadtimes To1 and To2 have the same duration. Although the oscillation mode in Fig. 3 is inductive, no efficient power transfer from the coil 6 to the e.g. cooking pot is achieved since the voltage drop during To1 is fast after switching off the first transistor which means that the oscillation frequency is well offset from the resonance frequency (where optimum power transfer would take place). Also shown is the temporal course of the coil current IL.

Figs. 4a-d show the detected middle voltage Vm before during and after the first deadtime To1 when operating the resonance circuit in different operation modes.
- In Fig. 4a) the resonance circuit oscillates in a 'safe' induction mode (see Fig. 3) where the frequency is well offset to the resonance frequency to the higher frequency side from the resonance frequency. Vm drops fast (with a high gradient Ga) after switch-off of the first transistor.
- In Fig. 4b) the resonance circuit oscillates in the induction mode where the frequency is close to the resonance frequency but still somewhat higher than the resonance frequency. The middle voltage drops later and slower (with a lower gradient Gb) .
- In Fig. 4c) the resonance circuit already oscillates in the capacitive mode where the middle voltage Vm does not reach zero V such that a voltage drop is present when the second transistor switches on (the so-called hard-switching). Correspondingly during To2 and for the first transistor in this mode the middle voltage does not reach Vi when the first transistor switches on. The oscillation frequency is at resonance frequency or close below thereof. The middle voltage drops later and even slower (with an even lower gradient Gc).
- In Fig. 4d) the circuit oscillates at a frequency offset to a lower frequency with respect to the resonance frequency and a 'worse' hard switching occurs (as compared to Fig. 4c) where a high voltage difference exists when the transistor is switched on. Thus high discharge currents flow which may result in overheating of the transistors. In the first/second dead times To1/To2 the middle voltage drops very slow (with a very low gradient Gd). The examples in Figs. 4a) - 4d) shows the relation Ga > Gb > Gc > Gd of the gradients.

Fig. 4b) additionally indicates an exemplary operation control implemented by the control unit 20 for optimizing the operation of the circuit 4 without overheating the transistors 14, 16. Fig. 4b) exemplifies how control unit 20 detects whether the oscillations of the resonance circuit 4 is in an effective oscillation range for the inductive mode close above the resonance frequency such that close-to-maximum power can be transferred to the good to be heated (e.g. cooking pot with food therein). Within the first deadtime To1 it is detected when or whether the middle voltage Vm is below a first voltage threshold Vn. When the timepoint at which the middle voltage Vm drops below Vn is within a time range Tr (being identified as a range of acceptable oscillation mode) then no change of the oscillation frequency is required. If it is not detected that Vm drops below Vn or when the timepoint is above the upper limit of Tr, then the driving frequency for the resonance circuit 4 is increased to higher frequencies than currently applied via the switching control by the control unit 20 via the driving unit 10. If it is detected that the timepoint when Vm drops below Vn is before the lower limit of Tr, then the driving frequency is decreased closer to the resonance frequency since the power transfer is not optimal.

The timing to determine at which timepoint Vm < Vn and whether it occurs (as well as it occurs within the limits of Tr) may be monitored/detected by the control unit 20. The control unit may have an internal clock for generating timing signals or has a timer input for inputting timing signals from an external source (e.g. the main controller of the cooking hob 30). The timing signals generated in unit 20 are e.g. used to generate the switch-on/off signals supplied to the driving unit 10 for switching on/off the first and second transistors 14, 16. From these the start time and end time of the deadtimes To1 and To2 are known and the time zone Tr can for example determined by the driving unit with respect to the first deadtime To2 (for To2 correspondingly). Also the timing signal is used for determining the timepoint for Vm < Vn.

Fig. 5a shows an excerpt from the time diagram illustrating the transistor drive voltages Vg1, Vg2 and the transformed or 'complementary' middle voltage Vm* whose temporal course is relevant for determining whether the first transistor 14 is operating under inductive or capacitive mode. For avoiding an overheating of the first transistor, the middle voltage has to be equal to Vi (no voltage drop across first transistor) when the first transistor is switched on via Vg1. Here determining whether the oscillation is in the inductive or capacitive mode can be made the same way as described before in relation to Fig. 4b), where however here a timepoint is determined when the middle voltage Vm exceeds a second threshold Vn* which is higher than the first threshold Vn (namely Vm should be at or close to Vi for avoiding a discharge through the transistor 14).

Thus the temporal behavior of the middle voltage Vm and/or its complementary Vm* can be evaluated during the first and/or second deadtime To1, To2 for determining the inductive or capacitive mode and for adjusting the oscillation frequency if necessary. Alternatively or additionally the temporal gradient dVm/dt and/or DVm*/dt of the voltage drop during the deadtime To1, To2 can be used (see above reference to gradients Ga, Gb, Gc and Gd) for determining inductive or capacitive mode. Typically the time zone Tr within the deadtimes To1, To2 is set in the range from 10% to 90% of To1, To2, where dependent on the duration of the switching sequence To1 and To2 are typically in the range of 1.4 - 2.2 µs (for e.g. 18 to 75 kHz).

In the following a simplified function implemented in the control unit 20 for avoiding hard switching and optimizing the power transmission is disclosed, which simplifies the control procedure as compared to the one described above in the context of the time range Tr and the limit Vn/Vn* or gradient comparison.

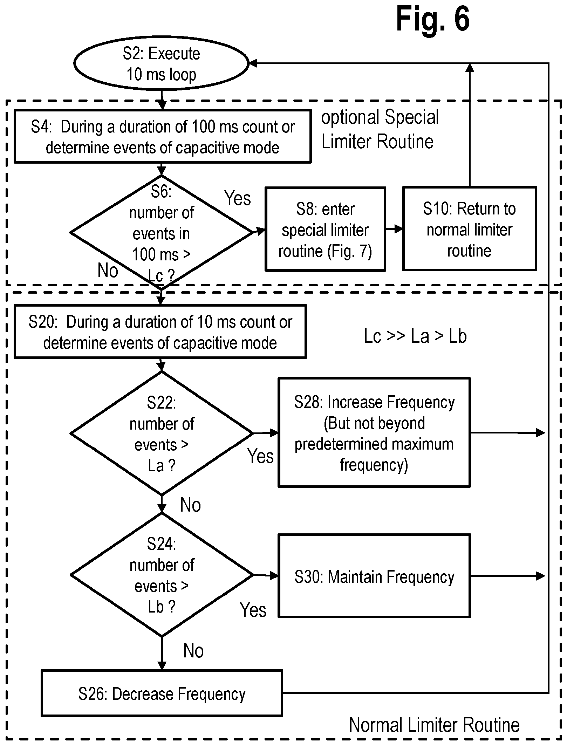

Fig. 6 shows another exemplary, simplified routine implemented in the control unit 20 for controlling the oscillation frequency towards the resonance frequency while avoiding excessive hard switching. In this routine events of 'soft' discharges over the first/second transistors is allowed since on the one hand small discharge currents through the transistors are acceptable and on the other hand the oscillation is still counted to the inductive mode. An example of a soft discharge is shown in Fig. 4b), where the middle voltage Vm drops to 0 V, but has a small temporary peak at the timepoint when the second transistor 16 is switched on, resulting in the soft discharge.

First the routine is described without the optional 'Special Limiter Routine' presented in the sequence of steps S6 - S10. In S2 a 10 ms loop is started which means that the behavior of the middle voltage Vm (and/or the complementary middle voltage Vm*) is monitored over a time period of 10 ms. As a typical oscillation frequency of the resonance circuit 4 is in the range of 25 to 50 kHz a multiple of switching sequences is comprised in the exemplary monitoring period of 10 ms. Of course the monitoring period may be less or longer, e.g. 3 - 5 ms, 4 - 10 ms or 8 to 100 ms. The 'executing a 10 ms loop' may mean that a dedicated loop of length 10 ms (or another one of the monitoring periods) is started and thereafter the next 10 ms loop is started with resetting the event counter/memory. Preferably in each passthrough of the loop the events that happened in the last 10 ms are considered. Then the event counter is refreshed each passthrough of the detection routine where each time the event counter newly counts the events that happened in the last 10 ms.

The event counter of the control unit sums up the number of events within the last 10 ms, wherein an event is a hard switching. A hard switching event is detected when the middle voltage Vm does not drop below the first threshold Vn and/or when the complementary middle voltage Vm* does not drop below the second threshold Vn*. As an example, the course of the middle voltage Vm in Figs. 4a) and 4b) has no hard switching event, while the course of the middle voltage in Figs. 4c) and 4d) are each a hard switching event. The course of the complementary middle voltage Vm* shown in Fig. 5a) is no hard switching event, but would be, if in the deadtime To2 the voltage Vm* would not drop below Vn*.

In step S20 the number of hard switching events (capacitive mode events) that happened within the period of the last 10 ms is counted. In step S22 the event count is compared to a first limit La of events. If the event count is higher than the first limit La, then (Yes) it is rated that there are too many hard switching events and the oscillation frequency is increased in step S28 resulting in an acceleration of the switching sequence. If the event count is lower than or equal to the first limit La the routine proceeds to S24.

In step 24 the event count is compared to a second limit Lb of events, wherein the first limit for the hard switching events is higher than the second limit: La > Lb. If the event count is higher than the second limit Lb, then (Yes) it is rated that the number of 'soft' hard switching events is acceptable and in step S30 the oscillation frequency is maintained as is, i.e. switching sequence is not modified. If the event count is lower than or equal to the second limit Lb the routine proceeds to S26.

When arriving at S26 it was rated that the low number of 'soft' hard switching events indicates that the oscillation frequency is higher than the resonance frequency to an extent that the power transfer in the resonance system is not optimal and the frequency should be decreased. Therefore the oscillation frequency is decreased, i.e. the switching sequence is decelerated. Then the loop returns to S2.

As an example the first limit La = 10 and the second limit Lb = 7 for the 10 ms loop. As an example the first voltage threshold Vn for comparison with Vm is in the range of 10 to 40% of Vi, 20 to 50% Vi, 30 to 70% Vi or 40 to 80 % Vi. As an example the second voltage threshold Vn* for comparison with Vm* is in the range of 90 to 60% of Vi, 80 to 50% Vi, 70 to 30% Vi or 60 to 20 % Vi.

In a further modification of the routine of the normal limiter routine shown in and described in the context with Fig. 6 only such hard switching events are counted where the hard-switching event Vm > Vn and/or Vm* > Vn* occurs within the time zone Tr described in the context of Fig. 4b).

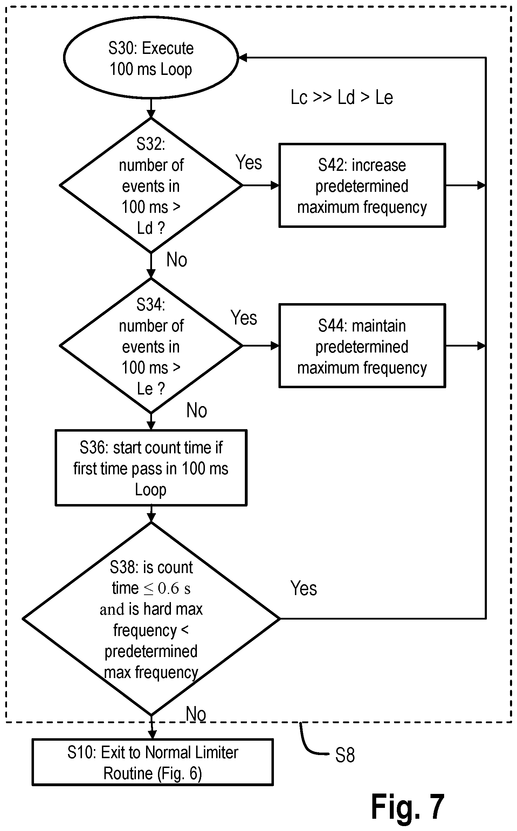

Fig. 7 shows a 'Special Limiter sub-Routine' which may be optionally implemented by the control unit 10 in the 'Normal Limiter Routine' shown in Fig. 6. The subroutine shifts a predetermined maximum frequency to higher frequencies which however are then limited to a hard max frequency. The hard max frequency is a system limitation given for example by a maximum timing or processing capability of the control unit 10 and/or by maximum oscillation frequency possible with the hardware components (e.g. capacitors, transistors or coil) of the resonance circuit 4. The predetermined maximum frequency is for example an oscillation frequency that is set by preprogrammed values for a given heating power level selected by the user. As can be seen at step S 28 in Fig. 6, in the normal limiter routine, the increase of the oscillation frequency is limited by the predetermined maximum frequency.

Under specific conditions (e.g. cooking pot not meeting standard requirements for induction heating) it may occur that despite operating under an oscillation frequency, which already has been increased to the predetermined maximum frequency, still the number of hard switching events exceeds a limit. For determining such operation mode, in step S6 it is determined whether the number of hard switching events is above a third limit Lc (as an example Lc = 70) within a time period of thee last 100 ms for example. If yes, In step S8 the special limiter routine shown in Fig. 7 is started at step S30. Otherwise (No) the normal limiter routine continues with step S20.

In step S32 of the special limiter routine the number of events in the last 100 ms (only as an example) is compared to a fourth limit Ld (Lc >> Ld, as an example Ld = 20). In case the number of events in the last 100 ms > Ld, in step S42 the predetermined maximum frequency is increased. Otherwise the routine proceeds to step S34 where the number of events is compared to a fifth limit Le (Le < Ld, e.g. Le = 10). If the number of events > Le, then in step S30 the predetermined maximum frequency remains unchanged. Otherwise the procedure proceeds to step S36.

In step S36 a time count is started when the 100 ms loop reaches the first time S36. In the following step S38, when the current time count within the 100 ms is less than or equal to 0.6 s and when the predetermined maximum frequency (which is changed within the 100 ms loop) is not higher than a hard max frequency, then the sub-routine proceeds with S30 (Yes), otherwise the 100 ms Loop is exited and the Normal Limiter Routine is resumed at step S10.

The Special Limiter Routine exemplified in Fig. 7 represents an adaptation of the maximum oscillation limit, if for example in S28 the increase of the oscillation frequency already has arrived at the predetermined maximum frequency and despite this maximum frequency within the normal limiter routine the operation of the resonance circuit does not achieve a sufficiently reduced number of hard-switching events. Then with the Special Limiter Routine an increase of the predetermined maximum frequency is allowed. Increase by the special limiter routine allows still safe operation of the induction system, but the user may be informed that an extended operation of the induction hob takes place. E.g. an optical signal can be activated which is visible through the cover element 32 and recommends for example to reposition the cooking pot at the center of the presently used cooking field.

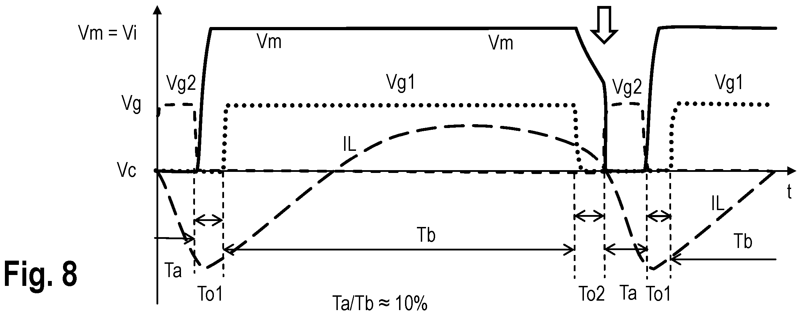

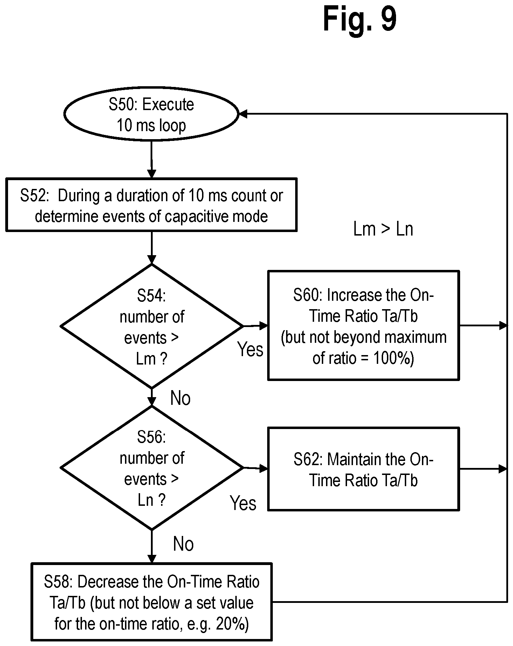

Fig. 8 shows the time diagram of one switching cycle illustrating the transistor drive voltages Vg1, Vg2 when the resonance circuit 4 is operated in an approximately 10% on-time ratio, where the on-time ratio is Ta/Tb and Ta is the duration of the on-time of the first transistor 14 and Tb is the duration of the on-time of the second transistor 16 during the full switching cycle. Fig. 3 above shows the operation when the on-time ratio is fixed at Ta/Tb = 100% at which the output power or power transmitted to a vessel to be heated by induction is maximum. When reducing the on-time ratio, the power emitted by the resonance circuit 4 is reduced thereby enabling a power control. The power control via lowering the on-time ratio may be used as an alternative to the power control by increasing the oscillation frequency and thus the distance between the resonance frequency and the oscillation frequency. Or both control functions can be used for reducing the power, i.e. the oscillation frequency may be increased to above the resonance frequency and the on-time ratio may be lowered to below 100% at the same time so that the control routines shown in Figs. 6 and 9 may be combined.

In addition to the transistor drive voltages Vg1 and Vg2 Fig. 8 shows the temporal course of the middle voltage Vm and of the induction current IL. Preferably during the change of the ratio Ta/Tb, the first and second dead times To1 and To2 remain the same and/or may have the same duration. As can be seen in the dead time To1 the middle voltage Vm has reached Vi such that the complimentary middle voltage Vm* = Vi - Vm = 0 at the end of To1 such that no current flows across the first transistor 14 when it is switched on by Vg1. In contrast thereto during the dead time To2 the middle voltage Vm has not lowered to Vm = 0 and a significant voltage drop is present across the second transistor 16 when it is switched on at the end of To2. Thus in the depicted example the second transistor is in hard-switching mode while the first transistor is in inductive mode such that the resonance circuit 4 as a whole is in hard-switching mode and the second transistor may be damaged by heating up.

While herein the power reduction control is described for the case where the on-time of the second transistor 16 is shorter than that of the first transistor 14 (i.e. Ta/Tb < 100%), power reduction control may also be implemented in that the on-time ration Tb/Ta < 100%. In this case the first transistor may experience hard-switching and may be damaged, but otherwise the same applies for this control function. Thus all what is said when considering Ta/Tb ≤ 100%, the same respectively applies for Tb/Ta ≤ 100%.

In Fig. 8 the operation at a 10% on-time ratio results in a hard-switching mode at a timepoint indicated with the vertical downward pointing arrow. When the on-time ratio is increased towards the 100%, the likelihood for operating in the hard-switching mode decreases until the inductive mode is reached. The inductive mode may be reached for on-time ratios where the Ta/Tb < 100%, for example when the oscillation frequency is sufficiently higher than the resonance frequency.

Fig. 9 shows an exemplary routine for controlling the on-time ratio for minimizing hard switching referring to the on-time ratio being Ta/Tb, however as said the same would apply for Tb/Ta where hard-switching may occur in the dead-time To1 instead of To2 as in the Fig. 8 example.

Similar to the control exemplified in flow diagram of Fig. 6, in the control exemplified by the flow diagram shown in Fig. 9, in step 50 a 10 ms loop is started. In step S52 (and corresponding to what is said for step S6) the number of hard-switching (i.e. capacitive mode) events in a 10 ms duration is counted which either may mean starting a fresh counting in S52 over a 10 ms period (which is implemented each time S52 id executed) or having a floating time period and the number of events within the past 10 ms is considered each time the control flow passes step S52. In step S54 the number of the counted events is compared to a first limit Lm. If the number of events is higher than Lm, then the routine continues with step S60 where the on-time ratio Ta/Tb is increased (e.g. each time an increase by 2%) towards the 100% ratio. If the ratio has already reached 100%, i.e. Ta = Tb, the ratio is not further increased. Instead the oscillation frequency may be increased using the control routine shown in Fig. 6 so that both flow diagrams of Figs. 6 and 9 may be interlinked with each other.

If in step S54 the number of events is the same or below Lm, the routine proceeds with step S56 where the number of events is compared with a second limit Ln, where Ln < Lm. If the number of events is higher than Ln, then in step S62 the on-time ratio is maintained as presently set. If in step S62 the number of events is the same or lower than Ln, then in step S58 the on-time ratio T/Tb is reduced, for example by 2% each time S58 is passed. The maximum reduction may be made down to a value of the on-time ratio which was originally set by the control unit as a power level at which the resonance circuit should operate. I.e. if no hard-switching or a tolerable number of hard-switching events (≤ Ln) is detected there is no need to further decrease the on-time ratio since the circuit is acceptably operated at the reduced set-point operation power. On the other hand the control unit already only allows a minimum on-time ratio of for example 10% as shown in Fig. 8 which is known as a lower limit where hard-switching occurs in any case and/or which forms a physical limitation posed by the timing of the control unit 20 and/or the components of the resonance circuit 4. After steps S60, S62 or S58 the routine is repeated by returning to S50.

The routine of Fig. 9 guides the operation of the resonance circuit in a regime of the on-time ratio such that a certain number of events within a give time period (in the example 10 ms) is accepted and where overheating of the transistors is prevented.

### Reference Numerals List

- 2: induction generator
- 4: induction/resonance circuit
- 6: resonance coil
- 8: power supply unit
- 9: rectifier unit
- 10: driving unit
- 12: half-bridge arrangement
- 14: high-side switch / first transistor
- 16: low-side switch / second transistor
- 20: control unit
- 22: middle node
- 24, 24a: voltage sensor circuit
- 30: induction cooking hob
- 32: cover element
- 34: temperature sensor
- 35: chassis
- 36: user interface
- a), b), c), d): resonance operation modes
- C1, C2: resonance capacitors
- C3, C4: snubber capacitors
- IL: coil current
- La, Lb, Lc, Ld, Le, Lm, Ln: limits for number of events
- Ti: gate-on time
- Ta, Tb: gate-on time first, second transistor
- To1, To2: first, second deadtime / delay period
- Tr: time zone of effective inductive mode range
- Vc: common voltage / ground
- Vg; Vg1/Vg2: gate voltage; first/second transistor drive voltage
- Vi: input voltage
- Vm: middle voltage
- Vm*: 'complementary' middle voltage
- Vn: first voltage threshold
- Vn*: second voltage threshold

## Claims

1. Induction generator (2) configured for driving an induction circuit (4), in particular for driving an induction coil of an induction hob (30), the induction generator (2) comprising:
a power supply unit (8) configured to provide an input voltage (Vi) with respect to a common voltage (Vc);
a driving unit (10) configured to provide a first and a second transistor driving voltage (Vg1, Vg2);
a half-bridge arrangement (12) comprising a first transistor and a second transistor (14, 16) connected in series at a middle node (22), wherein the serially connected first and second transistors (14, 16) are connected between the input voltage (Vi) and the common voltage (Vc), wherein the first transistor driving voltage (Vg1) is applied to the gate of the first transistor (14), and wherein the second transistor driving voltage (Vg2) is applied to the gate of the second transistor (16) ;
a resonance circuit (4) comprising an induction coil element (6) being electrically connected at one end to the middle node (22) and being configured to emit an electromagnetic field when in operation;
a control unit (20) having an output configured to supply a control signal to the driving unit (10) and having an input electrically connected to the middle node (22) configured for sensing the middle voltage (Vm) at the middle node,
wherein the control unit (20) is configured:
to apply the control signal at a setpoint frequency to the driving unit (10) such that via the first and second transistor driving voltages (Vg1, Vg2) a temporal switching sequence is implemented where the first transistor (14) is switched on and off and the second transistor (16) is switched on and off with a first delay period (Tol) between switching off the first transistor (14) and switching on the second transistor (16) and a second delay period (To2) between switching off the second transistor and switching on the first transistor;
to detect the middle voltage (Vm) and/or the complimentary middle voltage (Vm* = Vi - Vm);
to evaluate the amplitude of the middle voltage (Vm) or the temporal behavior of the middle voltage (Vm) in relation to the switching off of the first transistor (14) and/or in relation to the switching on of the second transistor (16), and/or to evaluate the amplitude of the complimentary middle voltage (Vm*) or the temporal behavior of the complimentary middle voltage (Vm*) in relation to the switching off of the second transistor (16) and/or in relation to the switching on of the first transistor (14); and
in dependency of the evaluation
to increase or to decrease or to maintain a setpoint frequency of the switching sequence being applied via the control signal, and/or
to increase or to decrease or to maintain an on-time ratio (Ta/Tb or Tb/Ta), where within a switching sequence Ta is the duration of switching on the first transistor (14) and Tb is the duration of switching on the second transistor (16).

2. The induction generator of claim 1, wherein the information about the switching on and off of the first transistor (14) and/or the information about the switching on and off of the second transistor (16)
is retrieved from the control signal applied from the control unit (20) to the driving unit (10), and/or
is retrieved from the internal control functions implemented in the control unit (20), and/or
is retrieved from a timer, preferably a timer integrated in the control unit (20), wherein the timer provides the control signal to the driving unit (10) which triggers the switching of the first transistor (14) and/or which triggers the switching of the second transistor (16).

3. The induction generator of claim 1 or 2, wherein the control unit (20) is configured
to evaluate the amplitude of the middle voltage (Vm) or the temporal behavior of the middle voltage, and/or
to evaluate the amplitude of the complimentary middle voltage (Vm* = Vi - Vm) or the temporal behavior of the complimentary middle voltage.

4. The induction generator of claim 1, 2 or 3, wherein the control unit (20) is configured
to evaluate the amplitude of the middle voltage (Vm) or the temporal behavior of the middle voltage exclusively in the time interval of the first deadtime (Tol) which is from the switching off of the first transistor (14) to the switching on of the second transistor (16), and/or
to evaluate the amplitude of the complimentary middle voltage (Vm* = Vi - Vm) or the temporal behavior of the complimentary middle voltage exclusively in the time interval of the second deadtime (To2) which is from the switching off of the second transistor (14) to the switching on of the first transistor (16).

5. The induction generator according to any of the preceding claims,
wherein the control unit is configured to monitor the middle voltage (Vm) in the period (Tol) from switching off the first transistor and switching on the second transistor, during the monitoring period, to compare the middle voltage with a first voltage threshold (Vn) and if the middle voltage (Vm) does not fall below or down to the first voltage threshold to determine that there is a hard switching event; and/or
wherein the control unit is configured to monitor the complimentary middle voltage (Vm*) in the period (To2) from switching off the second transistor and switching on the first transistor, during the monitoring period, to compare the middle voltage with a second voltage threshold (Vn*) and if the complimentary middle voltage (Vm*) does not fall below or down to the second voltage threshold to determine that there is a hard switching event.

6. The induction generator of claim 5, wherein the control unit is configured
after the monitoring of the middle voltage and/or complimentary middle voltage in the monitored period, to increase the setpoint frequency if there was an event, otherwise to decrease the setpoint frequency; or
to count the number of events in a preceding predetermined time period and
to increase the setpoint frequency, if the counted number of events is above a first event limit (La),
to maintain the setpoint frequency, if the counted number of events is the same or less than the first event limit (La) and above a second event limit (Lb), and
to decrease the setpoint frequency, if the counted number of events is the same or less than the second event limit (Lb).

7. The induction generator of claim 5 or 6, wherein the control unit is configured
after the monitoring of the middle voltage and/or complimentary middle voltage in the monitored period, to increase the on-time ratio (Ta/Tb, Tb/Ta) if there was an event, otherwise to decrease the on-time ratio; or
to count the number of events in a preceding predetermined time period and
to increase the on-time ratio, if the counted number of events is above a third event limit (Lm),
to maintain the on-time ratio, if the counted number of events is the same or less than the third event limit (Lm) and above a fourth event limit (Ln), and
to decrease the on-time ratio, if the counted number of events is the same or less than the fourth event limit (Ln),
wherein the fourth event limit is less than the third event limit Lm > Ln.

8. The induction generator of claim 6 or 7,
wherein the control unit is configured to provide an initial set-value for the on-time ratio and to decrease the on-time ratio not below the initial set-value, wherein preferably the initial set-value for the on-time ratio is depending on a target power level at which the resonance circuit (4) is to be operated; and/or
wherein the control unit is configured to provide an initial set-value for the setpoint frequency and to increase the setpoint frequency not above the initial set-value, wherein preferably the initial set-value for the setpoint frequency is depending on a target power level at which the resonance circuit (4) is to be operated.

9. The induction generator of any of the preceding claims 1 to 4,
wherein the control unit (20) is configured to evaluate the amplitude of the middle voltage (Vm) or the temporal behavior of the middle voltage,
a) by detecting the timepoint when the middle voltage (Vm) reaches a predetermined voltage value Vn, in particular the timepoint when the middle voltage (Vm) reaches zero-voltage, in relation to the timepoint of switching off of the first transistor (14) and/or to the timepoint of switching on of the second transistor (16), and/or
b) by detecting the gradient of the middle voltage (Vm) after switching off the first transistor (14), and/or
c) by detecting the decrease of the middle voltage (Vm) after switching off of the first transistor (14) with respect to the timepoint of switching off of the first transistor (14) and/or to the timepoint of switching on of the second transistor (16); and/or
wherein the control unit (20) is configured to evaluate the amplitude of the complimentary middle voltage (Vm*) or the temporal behavior of the complimentary middle voltage,
a') by detecting the timepoint when the complimentary middle voltage (Vm*) reaches a predetermined voltage value Vn*, in particular the timepoint when the complimentary middle voltage (Vm) reaches zero-voltage, in relation to the timepoint of switching off of the second transistor (16) and/or to the timepoint of switching on of the first transistor (14), and/or
b') by detecting the gradient of the complimentary middle voltage (Vm*) after switching off the second transistor (16), and/or
c') by detecting the decrease of the complimentary middle voltage (Vm*) after switching off of the second transistor (16) with respect to the timepoint of switching off of the second transistor (16) and/or to the timepoint of switching on of the first transistor (14).

10. The induction generator of any of the preceding claims 1 to 4, wherein the control unit (20) is configured
to increase the setpoint frequency in case the timepoint at which the middle voltage (Vm) or the complimentary middle voltage (Vm*) reaches a or the predetermined voltage value (Vn, Vn*) is at or close to the timepoint of switching on of the second transistor (16) or of the first transistor (14), and/or
to decrease the setpoint frequency in case the timepoint at which the middle voltage (Vm) or the complimentary middle voltage (Vm*) reaches a or the predetermined voltage value (Vn, Vn*) is at or close to the timepoint of switching off of the first transistor (14) or of the second transistor (16), and/or
to maintain the setpoint frequency in case the timepoint at which the middle voltage (Vm) or the complimentary middle voltage (Vm*) reaches a or the predetermined voltage value (Vn, Vn*) is within a predetermined time zone (Tr) within the delay period (To1, To2), to increase the setpoint frequency when the middle voltage or the complimentary middle voltage reaches the predetermined voltage value (Vn, Vn*) before the predetermined time zone (Tr), and to decrease the setpoint frequency when the middle voltage (Vm) or the complimentary middle voltage (Vm*) reaches the predetermined voltage value (Vn, Vn*) after the predetermined time zone (Tr).

11. Method of operating an induction generator (2), in particular an induction generator according to any of the preceding claims and/or for driving an induction coil of an induction hob (30),
the induction generator (2) comprising a resonance circuit (4) having the induction coil (6) and comprising a half-bridge arrangement (12) having a first transistor and a second transistor (14, 16) connected in series at a middle node (22), wherein the serially connected first and second transistors (14, 16) are connected between an input voltage (Vi) and a common voltage (Vc) and the induction coil (6) is connected to the middle node (22);
the method comprising:
applying a switching sequence, the switching sequence being repeated at a setpoint frequency for switching on and off of the first and second transistor (14, 16) of the half-bridge arrangement (12), wherein during the switching sequence the first transistor (14) is switched on and off and the second transistor (16) is switched on and off with a delay period (To) between switching off the first transistor (14) and switching on the second transistor (16)
sensing a middle voltage (Vm) that is present at the middle node (22),
a) evaluating the amplitude of the middle voltage (Vm) or the temporal behavior of the middle voltage (Vm) in relation to the switching off of the first transistor (14) and/or in relation to the switching on of the second transistor (16),
b) alternatively of additionally to step a), evaluating the amplitude of the complimentary middle voltage (Vm*) or the temporal behavior of the complimentary middle voltage (Vm*) in relation to the switching off of the second transistor (16) and/or in relation to the switching on of the first transistor (14), and
in dependency of the evaluation, increasing or decreasing or maintaining the setpoint frequency of the switching sequence, and/or
in dependency of the evaluation, increasing or to decreasing or to maintaining an on-time ratio (Ta/Tb or Tb/Ta), where within a switching sequence Ta is the duration of switching on the first transistor (14) and Tb is the duration of switching on the second transistor (16).

12. The method of claim 11, wherein
wherein in step a) the middle voltage (Vm) is monitored in the period (Tol) from switching off the first transistor and switching on the second transistor and compared with a first voltage threshold (Vn), and if the middle voltage (Vm) does not fall below or down to the first voltage threshold a hard switching event is determined; and/or
wherein in step b) the complimentary middle voltage (Vm*) in the period (To2) from switching off the second transistor and switching on the first transistor is monitored and compared with a second voltage threshold (Vn*), and if the complimentary middle voltage (Vm*) does not fall below or down to the second voltage threshold a hard switching event is determined.

13. The method of claim 12, wherein the number of events that occurred in a preceding predetermined time period is counted and the setpoint frequency
is increased, if the counted number of events is above a first event limit (La),
is maintain, if the counted number of events is the same or less than the first event limit (La) and above a second event limit (Lb), and
is decrease, if the counted number of events is the same or less than the second event limit (Lb).

14. The method of claim 12 or 13,
wherein after the monitoring of the middle voltage and/or complimentary middle voltage in the monitored period, to increase the on-time ratio (Ta/Tb, Tb/Ta) if there was an event, otherwise to decrease the on-time ratio; or
wherein the number of events is counted in a preceding predetermined time period, and the on-time ratio
is increased, if the counted number of events is above a third event limit (Lm),
is maintained, if the counted number of events is the same or less than the third event limit (Lm) and above a fourth event limit (Ln), and
is decreased, if the counted number of events is the same or less than the fourth event limit (Ln)
wherein the fourth event limit is less than the third event limit Lm > Ln.

15. The method of claim 11, wherein
the setpoint frequency is increased in case the timepoint at which the middle voltage (Vm) or the complimentary middle voltage (Vm*) reaches a predetermined voltage value (Vn, Vn*) is at or close to the timepoint of switching on of the second transistor (16) or of the first transistor (14); and/or
the setpoint frequency is decreased in case the timepoint at which the middle voltage (Vm) or the complimentary middle voltage (Vm*) reaches a or the predetermined voltage value (Vn, Vn*) is at or close to the timepoint of switching off of the first transistor (14) or of the second transistor (16); and/or
the setpoint frequency is maintained in case the timepoint at which the middle voltage (Vm) or the complimentary middle voltage (Vm*) reaches a or the predetermined voltage value (Vn, Vn*) is within a predetermined time zone (Tr) within the delay period (To1, To2), the setpoint frequency is increased when the middle voltage or the complimentary middle voltage reaches the predetermined voltage value (Vn, Vn*) before the predetermined time zone (Tr), and the setpoint frequency is decreased when the middle voltage (Vm) or the complimentary middle voltage (Vm*) reaches the predetermined voltage value (Vn, Vn*) after the predetermined time zone (Tr).
